**Europäisches Patentamt**

**European Patent Office**

**Office européen des brevets**

(19)

(11) Numéro de publication: **0 084 503**
**B1**

# (12) FASCICULE DE BREVET EUROPEEN

(45) Date de publication du fascicule du brevet:
**16.07.86**

(21) Numéro de dépôt: **83400127.3**

(22) Date de dépôt: **19.01.83**

(51) Int. Cl.⁴: **F 42 B 33/04**, B 67 B 3/00,
B 65 G 47/14

(54) **Dispositif d'introduction de pièces dans des logements respectifs d'objets circulant en cinématique continue.**

(30) Priorité: **20.01.82 FR 8200801**

(43) Date de publication de la demande:
**27.07.83 Bulletin 83/30**

(45) Mention de la délivrance du brevet:
**16.07.86 Bulletin 86/29**

(84) Etats contractants désignés:
**AT BE CH DE GB IT LI NL SE**

(56) Documents cités:
**FR - A - 496 252**
**FR - A - 1 367 585**
**FR - A - 2 054 104**
**GB - A - 2 071 038**
**US - A - 2 398 293**
**US - A - 2 506 144**
**US - A - 3 168 186**

(73) Titulaire: **MANUFACTURE DE MACHINES DU HAUT-RHIN S.A. (MANURHIN), 10, rue de Soultz, F-68100 Mulhouse (FR)**

(72) Inventeur: **Greslin, Bernard, 16 rue des Sapins, F-68170 Rixheim (FR)**
Inventeur: **Rohmer, Daniel, 1, rue Principale, F-68420 Herlisheim (FR)**

(74) Mandataire: **Martin, Jean-Jacques et al, Cabinet REGIMBEAU 26, Avenue Kléber, F-75116 Paris (FR)**

ACTORUM AG

## Description

La présente invention concerne un dispositif d'introduction de pièces dans les logements respectifs d'objets circulant en cinématique continue.

De nombreuses opérations industrielles nécessitent une présentation de deux pièces dans des positions relatives prédéterminées en vue de leur assemblage, et ceci de façon répétitive pour de tels couples identiques de pièces.

C'est par exemple le cas du bouchage des bouteilles, que l'on pratique en faisant défiler des bouteilles pleines, debout, et en amenant dans une position définie au-dessus de chacune d'elles, lors de son passage, une capsule que des moyens appropriés fixent ensuite par exemple par sertissage.

C'est également le cas de la pose des amorces dans des culots de douilles de munitions, ou dans des véhicules destinés à faciliter leur transfert ultérieur dans de telles douilles.

Ce peut être également le cas dans de nombreux autres domaines, comme par exemple celui de l'électronique pour le positionnement et la fixation de composants sur des circuits imprimés.

Le plus souvent, ces opérations sont pratiquées pas à pas, le défilement des pièces étant interrompu à chaque opération de positionnement ou de fixation mutuelle, cette opération s'effectuant à poste fixe.

Ainsi, dans l'exemple de l'introduction d'amorces de munitions dans des culots de douilles, on fait défiler les douilles une à une sous une presse de transfert sous laquelle les amorces, placées par exemple dans une trémie, sont amenées une à une par un système de coulisseau; lorsqu'une douille se présente sous la presse, le défilement des douilles est interrompu et la presse introduit une amorce, amenée entre temps par le système de coulisseau, dans le culot de la douille ainsi arrêtée; la file de douilles avance alors d'un pas, c'est-à-dire de la distance entre deux douilles, et l'opération reprend.

Il est ainsi possible de loger environ 80 à 120 amorces par minute dans les culots respectifs d'autant de douilles.

Cette technique connue présente plusieurs inconvénients.

L'un de ces inconvénients réside dans le fait que le défilement pas à pas des pièces soumet la mécanique d'entraînement à une fatigue intensive, et produit un bruit important.

Un autre inconvénient réside dans la relative lenteur de cette technique, qui n'autorise pas des cadences élevées en raison d'impératifs mécaniques. Cette technique est néanmoins suffisamment rapide pour que se posent des problèmes d'alimentation de la presse en amorces, c'est-à-dire pour qu'il puisse ne pas y avoir introduction d'une amorce dans le culot de chaque douille, et qu'il faille détecter les douilles vides et les séparer des autres.

En ce qui concerne le bouchage des bouteilles, on a déjà proposé, dans FR-A 2 054 104, d'emboîter mutuellement des capsules et des goulots de bouteilles circulant en continu, au moyen d'une machine comportant un plateau horizontal entraîné à la rotation autour d'un axe vertical et muni solidairement d'alvéoles périphériques dont chacun est propre à recevoir une capsule; à cet effet, les alvéoles sont ouverts dans le sens d'un éloignement par rapport à l'axe et défilent, lors de leur rotation conjointe avec le plateau, devant des moyens d'alimentation en capsules quant à eux fixes et comportant notamment une plaque présentant une face supérieure plane, lisse, horizontale sur laquelle les capsules glissent de façon forcée, dans le sens d'un rapprochement par rapport à l'axe, pour s'introduire une à une dans les alvéoles; cette plaque définit ainsi un fond pour les alvéoles dans une zone localisée à proximité immédiate des moyens d'alimentation en capsules; en dehors de cette zone localisée, les alvéoles sont ouverts vers le bas pour surplomber directement des moyens respectifs de rétention provisoire d'une bouteille, dans lesquels des moyens fixes d'alimentation en bouteilles introduisent des bouteilles respectives, au passage à proximité de la zone localisée précitée; par contre, vers le haut, chaque alvéole est fermé par un poinçon muni d'un aimant propre à retenir provisoirement la capsule correspondante hors de la zone localisée précitée; au cours de la rotation conjointe du plateau, chaque poinçon accomplit successivement, entre le passage de l'alvéole associé devant les moyens d'alimentation en capsules et des moyens de rétention provisoire de bouteille devant les moyens d'alimentation en bouteilles, et le passage de cet alvéole et de ces moyens de rétention provisoire de bouteille en regard de moyens de reprise de bouteilles capsulées, d'abord un mouvement vertical descendant provoquant l'emboîtement mutuel de la capsule et du goulot de la bouteille reçus des moyens d'alimentation correspondants, puis un mouvement vertical ascendant libérant la bouteille capsulée en vue de sa reprise par les moyens prévus à cet effet.

De façon générale, la machine décrite dans FR-A 2 054 104 est tout à fait comparable à une juxtaposition, en une unité rotative, d'une pluralité de presses de transfert du type décrit précédemment à propos de l'introduction d'amorces dans des douilles, à cette exception près qu'à la mobilité des presses est associé le remplacement du coulisseau d'alimentation à mouvement alternatif par d'autres moyens d'alimentation; ces derniers ne sont toutefois pas plus sûrs et sont cependant tout aussi complexes et tout aussi lents du fait de la nécessité de forcer mécaniquement les capsules, une à une, à accomplir un mouvement de rapprochement vis-à-vis de l'axe de rotation des alvéoles pour les introduire dans ces derniers; cette machine connaît donc les mêmes limitations qu'une batterie de presses de transfert du type évoqué précédemment, avec un coût comparable à celui d'une telle batterie.

En outre, la nécessité d'éviter toute fuite des capsules hors des alvéoles lors de la rotation de ces derniers conjointement avec le plateau entraîne la nécessité de limiter la vitesse de cette rotation pour limiter l'action de la force centrifuge sur les capsules; le bon fonctionnement de la machine exige en effet que chaque capsule reste rigoureusement en place dans l'alvéole correspondant en dépit de l'ouverture de celui-ci dans le sens d'un éloignement par rapport à l'axe de rotation, liée au mode d'alimentation en capsules.

De plus, l'emboîtement des capsules sur les goulots des bouteilles par descente des capsules vers les goulots quant à eux immobiles suivant une direction verticale, avec nécessité d'ouvrir totalement les alvéoles vers le bas hors de la zone localisée d'alimentation en capsules, oblige à prévoir des moyens de retenue provisoire des capsules à l'encontre d'une chute hors des alvéoles; de tels moyens sont simples à réaliser si, comme c'est le cas de beaucoup de capsules pour bouteille, les objets à retenir ainsi se prêtent à une attraction magnétique, auquel cas on peut les réaliser sous forme d'aimants comme le préconise FR-A 2 054 104; ils seraient par contre beaucoup plus complexes dans tout autre cas.

Le but de la présente invention est de remédier à ces inconvénients et, à cet effet, de proposer un dispositif introduisant des pièces dans des logements respectifs d'objets et avec une totale sécurité dans l'alimentation en cinématique continue, quels que soient d'ailleurs les objets envisagés, et notamment qu'il s'agisse de simples accessoires de transfert ou de pièces destinées à former avec les pièces introduites des produits finis ou des parties de produit fini.

On conçoit qu'un tel dispositif fonctionnant en continu permette de travailler à des cadences beaucoup plus élevées sans fatigue mécanique excessive, et à un niveau de bruit inférieur, et moyennant peu de rebuts en raison de la sécurité accrue dans l'alimentation des alvéoles.

A cet effet, la présente invention propose un dispositif d'emboîtement mutuel de pièces présentant une face de base et d'objets circulant en cinématique continue, comportant:

- un plateau présentant une face supérieure plane, lisse, horizontale, de périphérie extérieure circulaire,
- des moyens pour déposer des pièces sur ladite face du plateau, dans une position dans laquelle ces pièces reposent sur cette face par leur face de base,
- des moyens pour provoquer la rotation du plateau, par rapport à un support fixe, dans un sens prédéterminé, autour d'un axe vertical,
- une pluralité d'alvéoles individuels répartis selon un pas prédéterminé le long de la périphérie extérieure de la face supérieure du plateau, et présentant un fond coplanaire avec celle-ci et une forme complémentaire de celle d'une pièce pour recevoir une telle pièce dans une position prédéterminée dans laquelle elle repose sur le fond par sa face de base,

- des moyens pour provoquer la rotation des alvéoles autour dudit axe,
- des moyens pour retenir provisoirement un objet à l'aplomb de chaque alvéole, ces moyens étant fixes par rapport aux alvéoles,
- des moyens d'alimentation en objets démunis de pièces et de moyens de prise d'objets portant une pièce, respectivement dans une zone d'alimentation et dans une zone de reprise disposées sur le passage obligé des moyens pour retenir provisoirement un objet à l'aplomb de chaque alvéole lors de ladite rotation des alvéoles,
- des poinçons à raison d'un par alvéole, dans l'alignement vertical de celui-ci, chaque poinçon étant guidé à la translation suivant une direction verticale dans des moyens fixes par rapport aux alvéoles, entre une première position dans laquelle il est situé à l'opposé desdits moyens pour retenir provisoirement un objet par rapport à l'alvéole associé, et une deuxième position dans laquelle il traverse l'alvéole verticalement,
- des moyens pour provoquer un mouvement de translation du poinçon au fur et à mesure de la rotation des alvéoles, de telle sorte qu'il occupe sa première position dans la zone d'alimentation, et gagne sa deuxième position entre la zone d'alimentation et la zone de reprise,
- caractérisé en ce que, en vue de l'introduction desdites pièces dans des logements respectifs des objets circulant en cinématique continue:
- les moyens pour déposer des pièces sur ladite face du plateau, dans une position dans laquelle ces pièces reposent sur cette face et par leur face de base, sont disposés de façon à déposer des pièces dans une zone centrale de ladite face du plateau,
- lesdits moyens pour provoquer la rotation du plateau, par rapport au support fixe, dans un sens prédéterminé, autour d'un axe vertical, provoquent ladite rotation à une vitesse telle qu'il en résulte l'exercice, sur les pièces, d'une force centrifuge les acheminant vers la périphérie extérieure de ladite face,
- il est prévu un organe de guidage présentant au-dessus de la face supérieure du plateau, à proximité immédiate de celle-ci, une périphérie intérieure et une pluralité de canaux dont chacun débouche d'une part dans cette périphérie intérieure et d'autre part dans un alvéole, avec des dimensions telles qu'il autorise le passage des pièces une à une de ladite périphérie intérieure audit alvéole,
- lesdits moyens pour provoquer la rotation des alvéoles autour dudit axe sont prévus pour provoquer la rotation conjointe des alvéoles et de l'organe de guidage autour dudit axe, par rapport au plateau, en sens inverse dudit sens prédéterminé,
- les moyens pour retenir provisoirement un objet à l'aplomb de chaque alvéole sont prévus pour retenir provisoirement un objet au-dessus de chaque alvéole dans une position dans laquelle cet objet présente dans le prolongement vertical de l'alvéole un logement pour une pièce, ces moyens étant fixes par rapport aux alvéoles et à l'organe de guidage,

– chaque poinçon est guidé à la translation suivant une direction verticale dans des moyens fixes par rapport aux alvéoles et à l'organe de guidage entre ladite première position dans laquelle il présente une extrémité supérieure plane, horizontale, en coplanéarité avec la face supérieure du plateau pour définir le fond d'un alvéole, et ladite deuxième position dans laquelle il traverse l'alvéole verticalement et où son extrémité supérieure est située à proximité immédiate du logement de l'objet, ou dans ce logement.

On a déjà proposé, par exemple dans FR-A 496 252, de déposer sur une face supérieure lisse d'un plateau, des pièces que l'on fait migrer, sous l'action notamment de la force centrifuge résultant d'une rotation du plateau, vers une zone périphérique de ce dernier dans laquelle ces pièces s'engagent une à une dans des canaux d'évacuation aménagés dans un organe de guidage; ces canaux d'évacuation débouchent eux-mêmes sur des canaux distributeurs de longueur considérablement plus grande et qui acheminent ensuite les pièces librement, par gravité, c'est-à-dire de façon plus ou moins aléatoire, vers des postes de travail ainsi alimentés de façon incertaine, et non sur des alvéoles de l'organe de guidage, où s'effectue l'emboîtement des pièces dans des logements d'objets; de tels alvéoles arrêtent la course des pièces pour les placer une à une dans une position bien déterminée en vue d'un tel emboîtement à la périphérie même du plateau et provoquent, comme il sera décrit plus loin, une accumulation de pièces dans les canaux en offrant ainsi la certitude qu'une autre pièce succédera à chaque pièce arrêtée à un instant donné dans un alvéole respectif, après emboîtement de cette dernière pièce dans un logement d'un objet.

L'invention sera mieux comprise si l'on se réfère à la description ci-dessous, relative à un mode de mise en œuvre non limitatif, ainsi qu'aux dessins annexés qui font partie intégrante de cette description.

Ces dessins correspondent au cas d'un dispositif d'introduction d'amorces dans des logements respectifs de véhicules circulant en cinématique continue, mais l'Homme du métier adaptera naturellement les dispositions décrites au cas d'autres opérations d'introduction de pièces dans des logements d'objets quels qu'ils soient, sans pour autant sortir du cadre de la présente invention.

– La fig. 1 montre une vue du dispositif en coupe par un plan vertical axial, repéré en I–I à la figure 2; sur cette figure, le dispositif est démuni de dispositif auxiliaire de soufflage.

– la fig. 2 montre une vue de dessus du dispositif illustré à la figure 1, également démuni du dispositif de soufflage.

– la fig. 3 montre une vue de dessus partielle du dispositif muni du dispositif auxiliaire de soufflage.

– la fig. 4 montre une vue partielle en coupe suivant la ligne IV–IV de la figure 3.

– la fig. 5 montre une vue partielle dans le sens de la flèche V de la figure 1.

– la fig. 6 montre une vue en coupe suivant la ligne VI–VI de la figure 5.

– la fig. 7 montre une vue fortement agrandie, en coupe par un plan axial, d'une amorce de munition susceptible d'être introduite dans un véhicule, circulant en cinématique continue, par le dispositif illustré aux figures 1 à 6.

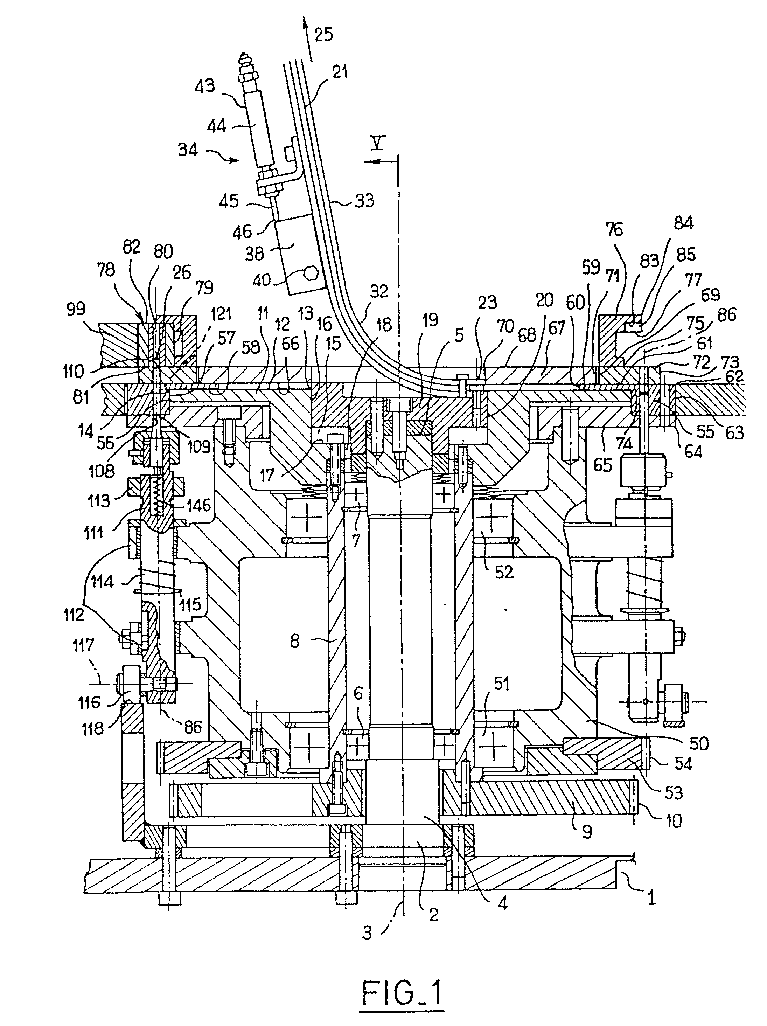

Notamment à la figure 1, on a désigné par 1 un support fixe du dispositif, et par 2 un pivot vertical fixé au support 1, au-dessus de celui-ci, et présentant une périphérie extérieure 4 formée de plusieurs tronçons cylindriques de révolution autour d'un axe vertical commun 3, et une face d'extrémité supérieure 5, transversale par rapport à l'axe 3.

Sur sa périphérie extérieure 4, le pivot 2 porte, de façon fixe à la translation parallèlement à l'axe 3, les cages intérieures respectives d'un roulement inférieur 6 et d'un roulement supérieur 7 dont les cages extérieures respectives sont portées, de façon fixe à la translation parallèlement à l'axe 3, par la périphérie intérieure d'un manchon 8 de révolution autour de l'axe 3, autour duquel il est ainsi monté à la rotation par rapport au pivot 2, sans possibilité de translation relative parallèlement à l'axe 3.

A sa partie inférieure, le manchon 8 est solidaire d'une couronne 9 présentant une denture extérieure 10 d'engrenage avec un pignon moteur non représenté, porté par des moyens moteurs par exemple pneumatiques destinés à provoquer la rotation du manchon 8 par rapport au pivot 2, autour de l'axe 3.

A son extrémité supérieure, le manchon 8 porte de façon solidaire un plateau 11 présentant une face supérieure 12 plane, lisse, horizontale, c'est-à-dire perpendiculaire à l'axe 3, et délimitée par des périphéries respectives intérieure 13 et extérieure 14 circulaires, centrées sur l'axe 3.

Dans une zone centrale, la face 12 du plateau 11 est creusée d'une cavité 15 délimitée par une face 16 cylindrique de révolution autour de l'axe 3 et sécante de la face 12 à la périphérie intérieure 13 de celle-ci, et par une face de fond 17 plane, transversale par rapport à l'axe 3, et percée centralement d'un alésage 18 cylindrique de révolution autour de l'axe 3, avec un diamètre par exemple identique au diamètre intérieur du manchon 8; par cet alésage 18, le pivot 2 traverse le plateau 11, au-dessus de la face 17 duquel est placée la face d'extrémité transversale supérieure 5 du pivot 2; à l'intérieur de la cavité 15, ce dernier porte de façon solidaire un pion 19, par conséquent fixe par rapport au support 1.

Le pion 19 présente une face périphérique extérieure 20 cylindrique de révolution autour de l'axe 3, avec un diamètre aussi voisin que possible de celui de la face 16 du plateau 11 de façon à être placée à proximité immédiate de celle-ci sans entraver la possibilité de rotation du plateau 11, solidaire du manchon 8, par rapport au pion 19; de préférence, sur un développement angulaire tel qu'elle ne constitue pas une entrave au fonctionnement des moyens d'alimentation en amorces qui vont être décrits, la face 20 se prolonge légèrement au-dessus de la face 16 du plateau 11 de telle sorte que le pion 19 définisse un rebord en saillie au-dessus de la face 12 du plateau 11, à la périphérie intérieure 13 de celui-ci.

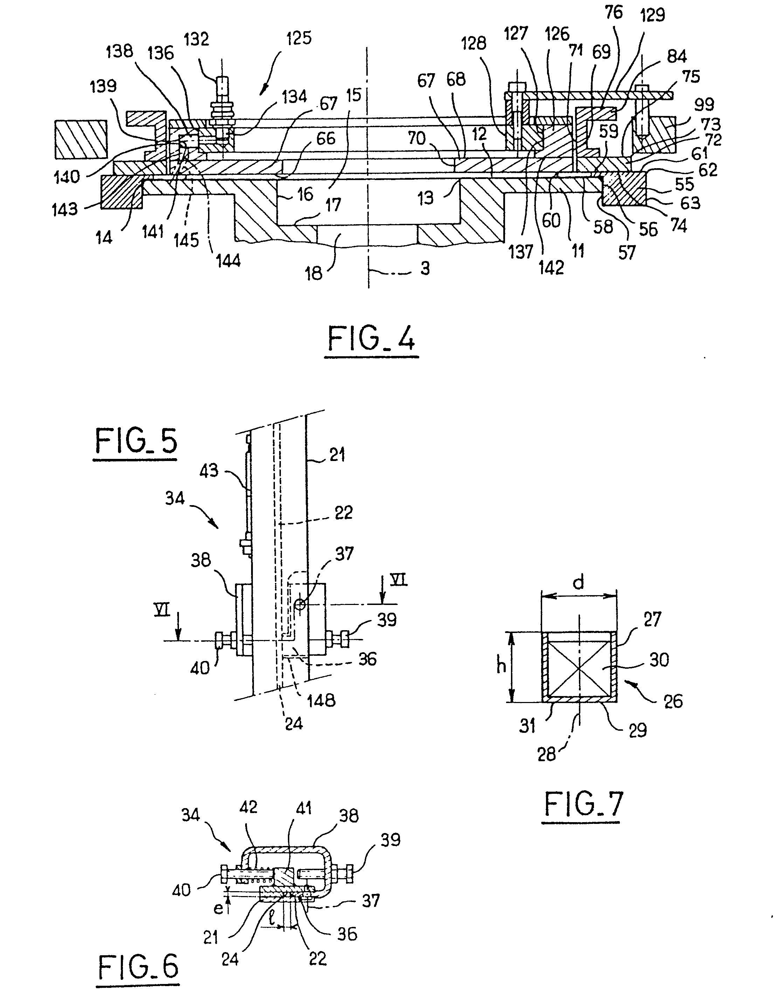

Les moyens d'alimentation en amorces débouchent sur la face supérieure 12 du plateau 11 par la périphérie intérieure 13 de celle-ci, et se présentent dans l'exemple illustré sous la forme d'un élément tubulaire 21 délimitant intérieurement un conduit 22 présentant, en section transversale par rapport à sa direction moyenne, comme le montre la figure 6, une forme rectangulaire propre à permettre le guidage à la translation, sans possibilité de basculement, d'amorces introduites une à une dans ce conduit 22.

L'élément tubulaire 21 présente une extrémité inférieure 23 par laquelle il est fixé sur le pion 19 et dans laquelle le conduit 22 présente une face de fond 24 coplanaire avec la face 12 du plateau 11 et débouchant sur celle-ci à sa périphérie intérieure 13, et une extrémité supérieure 25 non représentée, débouchant dans un dispositif de type connu en soi, tel qu'un bol vibrant, non représenté, introduisant des amorces une à une dans le conduit 22, dans une position privilégiée de ces amorces dans laquelle elles présentent au contact du fond 24 de ce conduit 22 une face de base prédéterminée; si l'on se réfère à la figure 7, où l'on a illustré une amorce 26 de type connu en soi, présentant une enveloppe en forme de godet définie par une paroi latérale 27 cylindrique de révolution autour d'un axe 28 et par une paroi de fond 29 orientée perpendiculairement à l'axe 28, pour contenir une charge 30, la face de base par laquelle l'amorce repose ainsi sur la face 24 de fond du conduit 22 est la face 31 de la paroi de fond 29 tournée vers l'extérieur du godet; l'épaisseur e du conduit 22, mesurée perpendiculairement au fond 24 de celui-ci, est sensiblement égale à la hauteur h de l'amorce 26, mesurée parallèlement à son axe 28, et la largeur l du conduit 22, mesurée parallèlement à son fond 24 et perpendiculairement à la direction moyenne du conduit 22, est sensiblement égale au diamètre extérieur d de la paroi 27 de l'amorce.

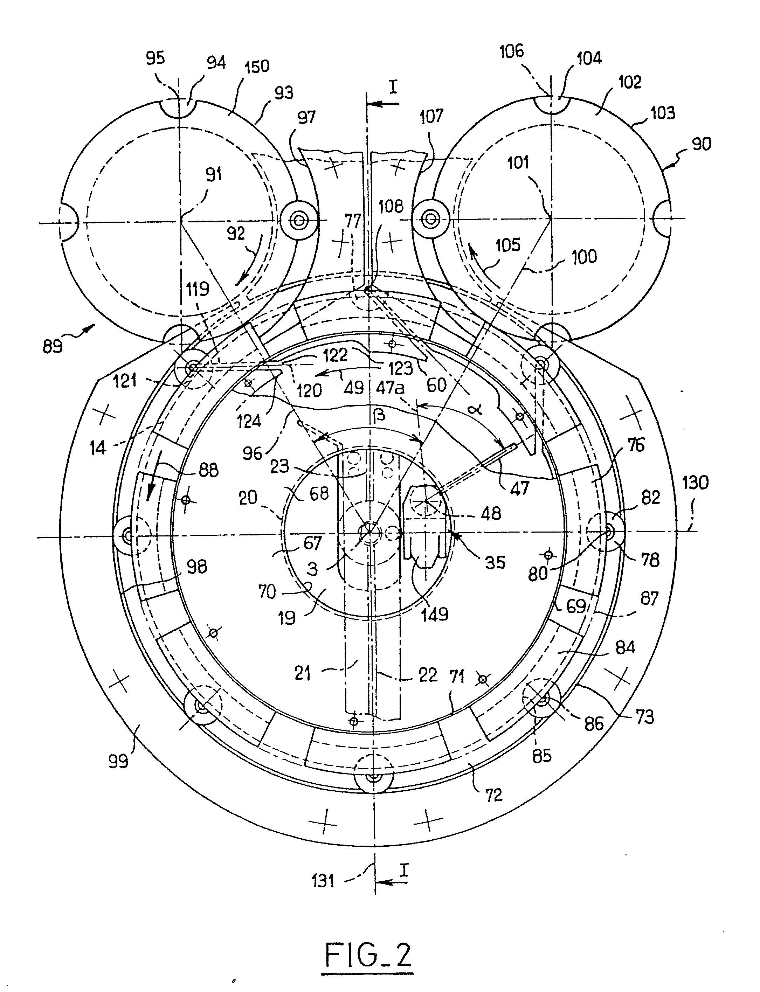

De l'extrémité inférieure 23 de l'élément tubulaire 21, à laquelle la direction moyenne du conduit 22 est sensiblement radiale par rapport à l'axe 3 et perpendiculaire à celui-ci, à l'extrémité supérieure 25 de l'élément tubulaire 21, ce dernier s'infléchit progressivement, en un coude 32, puis présente un tronçon rectiligne oblique 33 comportant un dispositif 34 destiné à interrompre provisoirement, de façon automatique, l'acheminement des amorces par le conduit 22 vers la face supérieure 12 du plateau 11 lorsque des moyens appropriés 35, qui seront décrits plus loin (voir la figure 2), détectent sur cette face 12 un nombre excessif d'amorces.

Ce dispositif 34, plus particulièrement visible aux figures 1, 5, 6, comporte un doigt 36 monté à pivotement sur le tronçon 33 de l'élément tubulaire 21, autour d'un axe 37 perpendiculaire au fond 24 du conduit 22, et apte à pénétrer à l'intérieur de ce dernier ou à s'en dégager, suivant que le pivotement s'effectue dans un sens ou dans l'autre, via un passage 148 aménagé à cet effet dans l'élément tubulaire 21.

Le doigt 36 est constitué par une partie d'un étrier 38 dans lequel peuvent être vissées ou dévissées à volonté des vis, respectivement 39 et 40, coopérant avec un organe de butée 41 solidaire de l'élément tubulaire 21 pour constituer des butées réglables à ce pivotement respectivement dans un sens et dans l'autre, de telle sorte que, notamment, la pénétration du doigt 36 à l'intérieur du conduit 22 lorsqu'il est nécessaire d'interrompre le passage des amorces 26 à l'intérieur de celui-ci soit juste suffisant pour que le doigt 36 prenne appui sur une amorce 26 se trouvant alors à son niveau, sans provoquer l'écrasement de cette amorce.

Avantageusement, dans un but de sécurité, l'étrier 38 est sollicité élastiquement au pivotement autour de l'axe 37 dans le sens d'une pénétration du doigt 36 à l'intérieur du conduit 22, par exemple par un ressort à boudin 42 disposé autour de la vis 40 et interposé entre d'une part la partie correspondante de l'étrier 38 et d'autre part l'organe de butée 41, et le pivotement de l'étrier 38 en sens inverse est provoqué par l'alimentation en fluide approprié d'un vérin à simple effet 43 dont le corps 44 est solidaire de l'élément tubulaire 21 et dont la tige 45, dans le sens de la sortie, est en appui contre une zone 46 de l'étrier 38, choisie de telle sorte que la sortie de la tige de vérin 45 se traduise par le pivotement de l'étrier 38 dans le sens d'un dégagement du doigt 36 par rapport au conduit 22; ainsi, en cas de panne dans l'alimentation du vérin 43, le ressort 42 tend à maintenir l'étrier 38 dans une position telle que le doigt 36 entrave le passage des amorces 26 dans le conduit 22.

Avantageusement, les moyens 35 de détection d'un bourrage sur la face supérieure 12 du plateau 11 comportent, comme le montre la figure 2, un bras 47 disposé au-dessus de cette face 12, à proximité immédiate de celle-ci, et monté à pivotement sur le pion 19 autour d'un axe 48 parallèle à l'axe 3; si on prend comme référence un sens de rotation prédéterminé 49 du plateau 11 autour de l'axe 3 par rapport au pivot 2, le bras 47 est sollicité élastiquement vers une position amont, illustrée en traits pleins à la figure 2, dans laquelle il est orienté approximativement radialement par rapport à l'axe 3, et dans laquelle il agit sur des moyens répétiteurs 149 portés par le pion 19 dans le sens d'une alimentation du vérin 43 en vue d'autoriser le passage des amorces dans le conduit 22; en cas de bourrage de la face supérieure 12 du plateau 11, c'est-à-dire si les amorces amenées par le conduit 22 sur celle-ci n'en sont pas évacuées suffisamment rapidement par les moyens qui seront décrits plus loin, ces amorces mues dans le sens de rotation 49 par le plateau 11 font pivoter le bras 47 autour de l'axe 48 dans ce même sens 49, d'un angle alpha, jusqu'à une position 47a illustrée en traits mixtes, dans laquelle il agit sur les moyens répétiteurs 149 dans le sens d'une interruption de l'alimentation du vérin 43 en fluide; comme il a été dit plus haut, le ressort 42 provoque alors un basculement de l'étrier 38 dans le sens de la pénétration du doigt 36 dans le conduit 22 pour interrompre le passage des amorces dans celui-ci; lorsque le bourrage cesse, la sollicitation appliquée au bras 47 par les amorces dans le sens 49 diminue, et le bras peut revenir à sa position initiale et, via les moyens répétiteurs 149, provoquer une nouvelle alimentation du vérin 43 en fluide et la libération du passage des amorces dans le conduit 22.

On notera que les moyens moteurs agissant sur la couronne 9 dans le sens d'une rotation du manchon 8 et du plateau 11 dans le sens 49 autour de l'axe 3 par rapport au pivot 2 impriment à ces éléments une vitesse telle que les amorces déposées sur la face 12 par l'élément tubulaire 21, et qui reposent sur cette face par leur face de base 31 après avoir reposé par cette face sur le fond 24 du conduit 22, migrent sous l'action de la force centrifuge vers la périphérie extérieure de la face 12 en restant au contact de celle-ci par leur face de base 31.

On notera que la force centrifuge ainsi appliquée aux pièces 26 en vue de leur migration vers la périphérie extérieure de la face 12 pourrait résulter d'autres moyens tels que par exemple un soufflage.

Dans l'exemple de mise en œuvre illustré, le dispositif selon l'invention comporte, outre l'ensemble formé par la couronne 9, le manchon 8 et le plateau 11, montés à la rotation solidaire autour de l'axe 3 par rapport au pivot 2, un deuxième ensemble susceptible d'une telle rotation, indépendamment du premier ensemble ainsi défini.

Ce deuxième ensemble est porté par un bâti 50 pour l'essentiel disposé autour du manchon 8, à l'extérieur de celui-ci.

Avantageusement, comme il est illustré, le bâti 50 est porté par le manchon 8, lequel porte à cet effet à sa périphérie extérieure, sans possibilité de translation relative parallèlement à l'axe 3, les cages intérieures respectives d'un roulement inférieur 51 et d'un roulement supérieur 52 dont les cages extérieures respectives sont portées, sans possibilité de translation relative parallèlement à l'axe 3, par le bâti 50.

A sa partie inférieure, située immédiatement au-dessus de la couronne 9, le bâti 50 présente une couronne 53 munie extérieurement d'une denture 54 de liaison avec un pignon de moyens moteurs non représentés, par exemple pneumatiques, aptes à provoquer la rotation du bâti 50 et d'autres organes qu'il porte, qui seront décrits plus loin, à la fois par rapport au manchon 8 et aux éléments que porte celui-ci et par rapport au pivot 2, autour de l'axe 3.

A sa partie supérieure, à proximité immédiate du plateau 11, le bâti 50 porte de façon solidaire une couronne 55, réalisée par assemblage de plusieurs pièces pour des raisons de montage, et qui enveloppe le plateau 11 dans les zones de celui-ci voisines de la périphérie extérieure 14 de sa face supérieure 12.

Plus précisément, le plateau 11 présentant sous sa face 12 une face périphérique extérieure 56 cylindrique de révolution autour de l'axe 3, et se raccordant à la périphérie extérieure 14 de la face 12, la couronne 55 présente une face périphérique intérieure 57 cylindrique de révolution autour de l'axe 3 avec un diamètre voisin de celui de la face 56, pour longer celle-ci sans toutefois entraver la rotation relative du plateau 11 et du bâti 50; vers le haut, cette face 57 est adjacente à une face annulaire 58 plane, orientée transversalement par rapport à l'axe 3 et tournée vers le bas, située au-dessus et à proximité immédiate d'une zone de la face 12 du plateau 11 située à proximité immédiate de la périphérie extérieure 14 de cette face 12; la face 58 est la face inférieure d'un rebord annulaire 59 que la couronne 55 présente au-dessus d'une zone de la face 12 située à proximité de la périphérie extérieure 14 de celle-ci, pour limiter la migration centrifuge des amorces sur la face 12 du plateau 11 et mettre ces amorces à un pas prédéterminé, comme il apparaîtra plus loin; à cet effet, le rebord 59 présente vers l'axe 3 une face périphérique intérieure 60 perpendiculaire à sa face 58 à laquelle cette face 60 se raccorde vers le bas; la forme de la face 60 sera décrite plus loin.

Vers le haut, le rebord 59 comme d'ailleurs l'ensemble de la couronne 55 est délimité par une face supérieure 61 annulaire, plane, orientée transversalement par rapport à l'axe 3, laquelle présente une périphérie extérieure circulaire 62 par laquelle elle se raccorde vers le bas à une face périphérique extérieure 63, cylindrique de révolution autour de l'axe 3 avec un diamètre supérieur à celui de la face 57 pour définir la face périphérique extérieure de la couronne 55; vers le bas, cette face 63 se raccorde à la périphérie extérieure 64, circulaire d'axe 3, d'une face inférieure 65 de la couronne 55, plane et orientée transversalement par rapport à l'axe 3.

On notera que l'épaisseur du rebord 59, mesurée parallèlement à l'axe 3, c'est-à-dire la distance séparant les faces 58 et 61, est sensiblement voisine de la hauteur h d'une amorce.

Par sa face supérieure 61, la couronne 55 porte d'une part, dans une zone proche de sa face périphérique intérieure 60, la partie périphérique extérieure de la face inférieure 66, plane et transversale par rapport à l'axe 3, d'un couvercle 67 par ailleurs délimité par une face supérieure 68 également plane et orientée transversalement par rapport à l'axe 3, par une face périphérique extérieure 69 cylindrique de révolution autour de l'axe 3 avec un diamètre intermédiaire entre les diamètres respectifs de la face périphérique intérieure 60 du rebord 59 et de la face 57 de la couronne 55, et par une face périphérique intérieure 70, également cylindrique de révolution autour de l'axe 3, avec un diamètre voisin de celui de la face périphérique extérieure 16 du plateau 11 ou celui de la face périphérique extérieure 20 du pion 19; ainsi, le couvercle 67 couvre par sa face 66 la zone de la face supérieure 12 du plateau 11 située entre la périphérie intérieure 13 de celle-ci et la face périphérique extérieure 60 du rebord 59 de la couronne 55, à une distance de la face 12 voisine de la hauteur h d'une amorce et en pratique légèrement supérieure à celle-ci, de façon à éviter tout risque de basculement des amorces lors de leur migration centrifuge sur la face supérieure 12 du plateau 11.

Par sa face périphérique extérieure 69, le couvercle 67 se raccorde à la face périphérique intérieure 71, également cylindrique de révolution autour de l'axe 3 avec un diamètre voisin de celui de la face 69, d'une couronne annulaire 72, comme le couvercle 67 solidaire de la couronne 55, laquelle couronne 72 est par ailleurs délimitée par une face périphérique extérieure 73 cylindrique de révolution autour de l'axe 3 avec un diamètre supérieur à celui de la face 57 de la couronne 55, et dans l'exemple illustré inférieur à celui de la face 63 de celle-ci, par une face inférieure 74 plane, orientée transversalement par rapport à l'axe 3 et jointive de la face supérieure 61 de la couronne 55, et par une face supérieure 75 également plane et orientée transversalement par rapport à l'axe 3, coplanaire avec la face supérieure 68 du couvercle 67.

Par sa face supérieure 75, la couronne annulaire 72 porte de façon solidaire une pluralité de supports identiques 76, occupant des positions identiques par rapport à l'axe 3 et régulièrement répartis angulairement autour de celui-ci, chacun de ces supports 76 définissant un alvéole 77 ouvert dans le sens d'un éloignement par rapport à l'axe 3, et apte à recevoir un véhicule 78 en forme de manchon tubulaire, présentant des périphéries respectivement extérieure 79 et intérieure 80 cylindriques de révolution autour d'un axe et des faces d'extrémité respectivement inférieure 81 et supérieure 82 planes et orientées transversalement par rapport à cet axe, dans une position dans laquelle ce véhicule 78 repose par sa face 81 contre la face supérieure 75 de la couronne annulaire 72, sa face supérieure 82 est engagée sous une face inférieure 83, plane et orientée perpendiculairement à l'axe 3, d'un rebord supérieur 84 du support 76, et sa face périphérique extérieure 79 en contact avec une face complémentaire 85 que le support 76 présente par exemple dans son rebord supérieur 84; les faces cylindriques 85 respectives des différents supports 76 sont cylindriques de révolution autour d'axes 86 fixes par rapport au bâti 50, parallèles à l'axe 3, placés à une même distance de celui-ci et régulièrement répartis autour de lui et le diamètre de la face 85 est identique à celui de la face périphérique extérieure 79 d'un véhicule 78, de telle sorte que, lorsque des véhicules 78 sont placés dans les alvéoles respectifs 77 des supports 76 dans la position décrite ci-dessus, leurs axes respectifs soient confondus avec les différents axes 86.

Avantageusement, dans le sens d'un éloignement par rapport à l'axe 3, les rebords supérieurs respectifs 84 des différents supports 76 sont limités suivant un cylindre virtuel 87, de révolution autour de l'axe 3, incluant les axes 86, chaque alvéole 77 présentant ainsi une face 85 approximativement hémicylindrique de révolution autour de l'axe 86 correspondant.

Dans l'exemple de mise en œuvre de l'invention illustré, le bâti 50 est entraîné par des moyens moteurs non représentés, par l'intermédiaire de la couronne 53, dans une rotation autour de l'axe 3, par rapport au pivot fixe 2, dans un sens 88 identique au sens 49; la vitesse angulaire de rotation du bâti 50 dans le sens 88 par rapport au pivot fixe 2, établie en fonction de la circulation des véhicules en cinématique continue, est toutefois inférieure à la vitesse de rotation dans le sens 49 du manchon 8 et du plateau 11 par rapport à ce même pivot fixe 2, de façon à établir une rotation du bâti 50 et des éléments qu'il porte, par rapport au manchon 8 et au plateau 11, en sens inverse du sens 49 de rotation de ce plateau 11 par rapport au pivot fixe 2.

Cette rotation du bâti 50 et des éléments qu'il porte dans le sens 88 par rapport au pivot fixe 2 amène successivement chacun des alvéoles 77 à un poste 89 d'alimentation de ces derniers en véhicules vides, puis à un poste 90 de reprise des véhicules garnis d'une amorce.

Le poste d'alimentation 89 est avantageusement défini par une roue 150 d'axe 91 parallèle à l'axe 3, et que des moyens appropriés entraînent à la rotation autour de cet axe 91, par rapport au support fixe 1, dans un sens 92 inverse du sens 88; la roue 150 présente une périphérie extérieure 93 cylindrique de révolution autour de son axe 91, et dans laquelle sont creusés des alvéoles 94, approximativement hémicylindriques de révolution autour d'un axe 95 parallèle à l'axe 91 et situé sur le cylindre défini par la périphérie extérieure 93 de la roue 150, le diamètre de chacun de ces alvéoles 94 étant identique à celui d'un véhicule 78.

La face périphérique 93 de la roue 150 est tangente au cylindre 87 dans un plan 96 incluant les axes 3 et 91, et les vitesses de rotation respectives de la roue 150 et du bâti 50 par rapport au support fixe 1, compte tenu de la répartition angulaire, uniforme, des alvéoles 94 autour de l'axe 91 et de la répartition angulaire des alvéoles 77 autour de l'axe 3, sont telles que les alvéoles 94 et 77 se succédant respectivement dans le sens 92 et dans le sens 88 se présentent simultanément dans une position dans laquelle leurs axes respectifs 95 et 86 se confondent dans le plan 96, et dans laquelle ces alvéoles définissent intérieurement une forme complémentaire de la forme extérieure d'un véhicule.

Les véhicules sont introduits un à un dans les différents alvéoles 94 de la roue 150 par des moyens connus en eux-mêmes et non représentés, puis retenus dans les alvéoles respectifs, lors de la rotation de la roue 150 dans le sens 92 et jusqu'à ce que leur axe, confondu avec l'axe 95 de l'alvéole correspondant, se confonde avec l'axe 86 d'un alvéole 77 dans le plan 96, par une face de guidage 97, cylindrique de révolution autour de l'axe 91 vers lequel elle est tournée, avec un rayon sensiblement égal à celui de la face 93 de la roue 150 augmenté de celui d'un véhicule; cette face 97, située en amont de la zone du plan 96 située entre les axes 91 et 3 si l'on se réfère au sens 92, s'interrompt à proximité immédiate de ce plan.

Si l'on se réfère au sens de rotation 88, au voisinage immédiat de ce plan est située l'extrémité amont d'une face de guidage 98 quant à elle cylindrique de révolution autour de l'axe 3 et tournée vers celui-ci, avec un rayon voisin du rayon du cylindre 87 augmenté de celui d'un véhicule, cette face de guidage 98 étant définie par la face périphérique intérieure d'un organe en forme de croissant 99 fixe par rapport au support 1.

La face de guidage 98, qui retient dans le sens d'un éloignement par rapport à l'axe 3 les véhicules 78 introduits un à un dans les alvéoles respectifs 77 au niveau du poste d'alimentation 89, se poursuit jusqu'au poste de reprise 90, et plus précisément jusqu'à un plan 100 incluant l'axe 3 et situé en amont du plan 96, si l'on se réfère au sens de rotation 88, d'un angle bêta aussi faible que possible; le plan 100 est défini par l'axe 3 et par un axe 101, parallèle à cet axe 3, et situé à la même distance de celui-ci que l'axe 91, d'une roue 102 en tous points semblable à la roue 150; notamment, cette roue 102 présente une face périphérique extérieure 103 cylindrique de révolution autour de l'axe 101, avec un diamètre identique à celui de la face périphérique extérieure 93 de la roue 150, et elle porte au niveau de cette face périphérique 103 des alvéoles 104 identiques aux alvéoles 94, en un nombre identique, et comme ces derniers régulièrement répartis angulairement; la roue 102 est entraînée à la rotation autour de l'axe 101, par rapport au support 1, dans un sens 105 identique au sens 92, à la même vitesse angulaire que la roue 150, de façon à présenter successivement ses alvéoles 104 dans une position dans laquelle leur axe 106, situé sur le cylindre défini par sa périphérie extérieure 103, est confondu dans le plan 100 avec l'axe 86 d'un alvéole 77; à proximité immédiate du plan 100, entre les axes 101 et 3, est située l'extrémité amont, si l'on se réfère au sens de rotation 105, d'une face de guidage 107 cylindrique de révolution autour de l'axe 101 avec un rayon voisin du rayon de la face périphérique 103 de la roue 102 augmenté du rayon d'un véhicule, et qui se poursuit vers l'aval, si l'on se réfère au sens 105, jusqu'à des moyens non représentés de reprise des véhicules dans les alvéoles 104.

On notera que, compte tenu de cette position des postes d'alimentation 89 et de reprise 90, l'alvéole ou les alvéoles 77 se trouvant à un instant donné dans une position telle que leur axe 86 soit situé dans l'angle bêta défini par les plans 100 et 96, du poste de reprise 90 au poste d'alimentation 89 dans le sens 88, est démuni de véhicule.

Par contre, de la zone du plan 96 située entre les axes 91 et 3, à la zone du plan 100 située entre les axes 101 et 3, si l'on se réfère au sens de rotation 88, chaque alvéole 77, coopérant avec la face de guidage 98, retient un véhicule dans une position telle que les axes des véhicules ainsi retenus, confondus avec les axes 86 respectifs des alvéoles 77 correspondants, se trouvent les uns par rapport aux autres à un pas prédéterminé suivant la périphérie du cylindre virtuel 87.

Le but du dispositif illustré est d'introduire à l'intérieur de chacun des véhicules ainsi disposés l'une des amorces amenées sur la face supérieure 12 du plateau 11 et migrant vers la périphérie extérieure 14 de celle-ci.

A cet effet, il est prévu suivant chacun des axes 86 un alésage 108 cylindrique de révolution autour de cet axe, avec un diamètre voisin du diamètre d d'une amorce, et traversant l'ensemble formé par les couronnes 55 et 72 de part en part de la face inférieure 65 de la couronne 55 à la face supérieure 75 de la couronne 72; on notera que, chaque fois qu'un véhicule 78 est placé dans un alvéole 77, sa périphérie intérieure 80, dont le diamètre est voisin du diamètre d d'une amorce 26, prolonge vers le haut la périphérie intérieure de l'alésage 108 correspondant.

Chacun des alésages 108 reçoit par le bas un poinçon 109, cylindrique de révolution autour de l'axe 86 correspondant et présentant une face d'extrémité supérieure 110 plane, orientée transversalement par rapport à l'axe 86.

Chacun des poinçons 109 est porté à son extrémité inférieure par un porte-poinçon 111 monté à coulissement suivant l'axe 86 correspondant, sans possibilité de rotation relative, dans des paliers de guidage 112 du bâti 50.

Le poinçon 109 peut ainsi évoluer, par coulissement du porte-poinçon 111 dans les paliers 112, entre une position inférieure dans laquelle une butée 113 portée par le porte-poinçon 111 est en appui vers le bas contre l'un des paliers de guidage 112 et dans laquelle la face supérieure 110 du poinçon 109 est coplanaire avec la face supérieure 12 du plateau 11, à l'intérieur de l'alésage correspondant 108, et une position supérieure dans laquelle la face 110 est coplanaire avec la face supérieure 75 de la couronne annulaire 72 ou située à un niveau supérieur à celui de cette face 75, mais toutefois inférieur à celui de la face supérieure 83 d'un alvéole 77 d'une distance au moins égale à la hauteur h d'une amorce 26.

Un ressort à boudin 114 travaillant à la compression entre une collerette 115 du porte-poinçon 111 et l'un des paliers de guidage 112 de celui-ci tend à ramener élastiquement le porte-poinçon 111 à la position inférieure définie ci-dessus, et le passage à la position supérieure est provoqué par le roulement, sur un chemin de roulement 118, d'un galet 116 monté à la rotation sur l'extrémité inférieure du porte-poinçon, autour d'un axe 117 situé dans le plan incluant l'axe 3 et l'axe 86 du poinçon corespondant, perpendiculairement à ces axes 3 et 86.

Le chemin de roulement 118, porté de façon fixe par le support 1, présente une forme telle que le poinçon se trouve en position inférieure lorsque l'alvéole 77 correspondant passe au poste d'alimentation 89 puis, par la suite de la rotation du bâti 50 dans le sens 88 par rapport au support fixe 1, gagne progressivement sa position haute; si celle-ci est telle que la face supérieure 110 du poinçon 109 soit coplanaire avec la face supérieure 75 de la couronne 72, cette position peut être conservée jusqu'à ce que l'axe 86 correspondant au poinçon envisagé parvienne au plan 100, au poste de reprise 90, le poinçon ne redescendant à sa position inférieure que par la suite, pendant le franchissement de l'angle mort bêta de façon à se présenter dans cette position inférieure au passage du plan 96, au poste d'alimentation 89; si, par contre, la position supérieure du poinçon 109 correspond à un passage de son extrémité supérieure 110 au-dessus de la face 75 de la couronne 72, c'est-à-dire à un engagement de l'extrémité supérieure du poinçon à l'intérieur du véhicule, il est impératif que le mouvement de descente du poinçon, par rapport à sa position supérieure, s'amorce avant le franchissement du plan 100 au poste de reprise 90, de façon que la face supérieure 110 du poinçon 109 au franchissement de ce poste se trouve au plus au niveau de la face 75 de la couronne 72.

Lorsqu'il occupe sa position basse, c'est-à-dire notamment au début de son trajet dans le sens 88 à partir du franchissement du plan 96 au poste d'alimentation 89, chaque poinçon 109 définit par son extrémité supérieure 110 le fond, coplanaire avec la face 12 du plateau 11, d'un alvéole par ailleurs délimité par l'alésage 108, et qui peut recevoir une amorce 26 dans une position dans laquelle celle-ci repose par sa face de base 31 sur l'extrémité 110 du poinçon 109.

Les amorces 26 peuvent être acheminées une à une jusqu'à l'alvéole ainsi défini par un canal respectif 119 aménagé dans la couronne 55, de la face périphérique intérieure 60 de celle-ci jusqu'à l'alvéole considéré; chaque canal 119, dans l'exemple illustré rectiligne de direction moyenne respective 120, présente une largeur, mesurée perpendiculairement à cette direction moyenne 120 dans un plan virtuel perpendiculaire à l'axe 3, sensiblement voisine du diamètre d d'une amorce, et traverse le rebord 59 sur la totalité de la hauteur de celui-ci, et son fond est par conséquent défini par la face 12 de la périphérie intérieure 60 du rebord 59 jusqu'à l'intersection de la face 57, qui définit la périphérie intérieure du rebord 59; de cette face 57 à l'alésage 108, le fond du canal est défini par une face plane 121 en dépression par rapport à la face supérieure 61 de la couronne 55, et coplanaire avec la face 12 du plateau 11.

Si l'on se réfère au sens de rotation 49 du plateau 11 par rapport au support fixe 1, la direction moyenne 120 de chaque canal 119, identique d'un canal à l'autre si l'on se réfère par exemple à l'axe 3, est telle que le canal considéré débouche dans la périphérie intérieure 60 du rebord 59 dans une zone située en amont de l'alésage 108 correspondant; une telle disposition favorise l'engagement des amorces une à une dans chaque canal 119 non seulement en raison de la force centrifuge qui s'exerce sur elle, mais également en raison de la rotation de la face supérieure 12 du plateau 11 dans le sens 49 par rapport au rebord 59, consécutive à la différence entre les vitesses de rotation respectives du bâti 50 dans le sens 88 et du plateau 11 dans le sens 49, par rapport au support 1.

Avantageusement, immédiatement en amont de l'embouchure 122 de chaque canal 119 dans la périphérie intérieure 60 du rebord 59, cette périphérie par ailleurs cylindrique de révolution autour de l'axe 3 présente une poche 123 d'accumulation d'amorces, en décrochement dans le sens d'un éloignement par rapport à l'axe 3; dans sa zone la plus éloignée de cet axe, la poche 123 présente avantageusement une forme cylindrique de révolution autour de celui-ci, et dans la zone aval de cette zone, si l'on se réfère au sens de rotation 49, est située l'embouchure 122 du canal 119; une telle disposition ménage immédiatement en aval de l'embouchure 122 du canal 119, dans la périphérie 60 du rebord 59, un bec 124 prolongeant celui des bords du canal 119 parallèles à sa direction moyenne 120 qui est placé en aval si l'on se réfère au sens de rotation 49; ainsi, ce bec 124 dévie vers l'intérieur du canal 119 correspondant les amorces tendant à s'accumuler dans la poche 123 immédiatement voisine du fait de leur centrifugation sur la face supérieure 12 du plateau 11 et de la vitesse différentielle du plateau 11 et du décrochement de la poche 123.

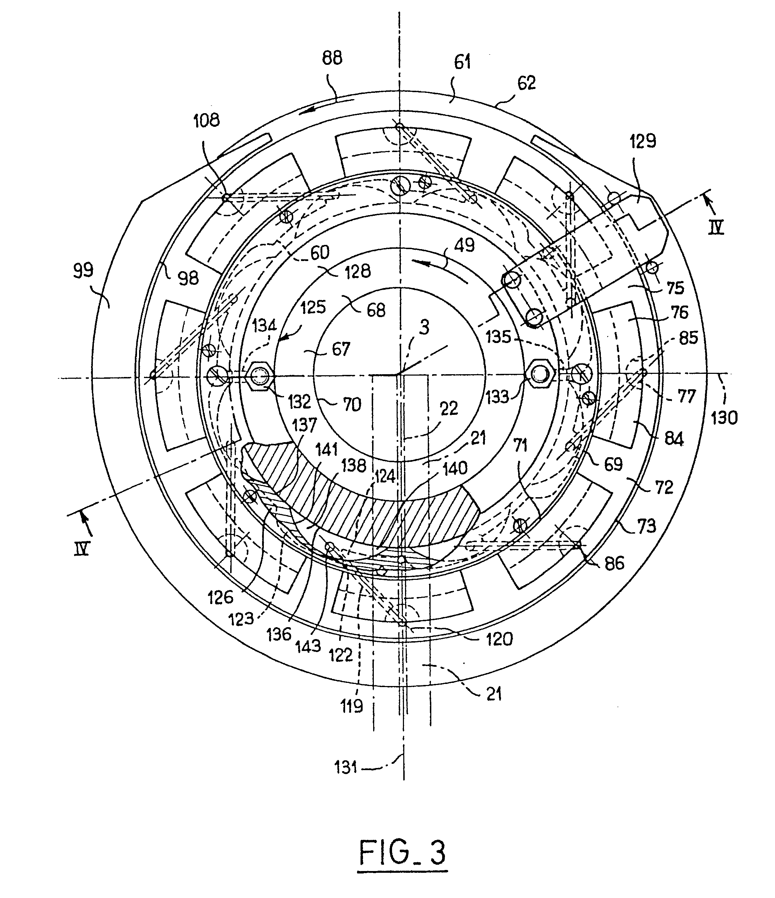

Avantageusement, cette introduction des amorces une à une dans chacun des canaux 119 est en outre facilitée par des moyens pneumatiques illustrés aux figures 3 et 4, où l'on n'a repris que partiellement les éléments du dispositif illustré aux autres figures; naturellement, tous ces éléments se retrouvent cependant dans ce mode de mise en œuvre préféré du dispositif.

Le dispositif de soufflage 125 visible aux figures 3 et 4 est destiné à insuffler un gaz, par exemple de l'air, dans deux des canaux 119 occupant des positions privilégiées, de leur embouchure 122 vers l'alésage 108 correspondant, pour appliquer aux amorces se trouvant alors dans ces canaux une poussée supplémentaire vers les alésages correspondants.

A cet effet est fixée sur la face supérieure 68 du couvercle 67, dans une zone de celle-ci proche de la face périphérique extérieure 69, une couronne 126 ainsi solidaire du bâti 50 à la rotation autour de l'axe 3.

Cette couronne 126 présente vers l'axe 3 une gorge 127 de révolution autour de cet axe, et dans laquelle est montée à rotation libre autour de l'axe 3 une bague 128 immobilisée à la rotation par rapport au support 1 par liaison avec l'organe du guidage 99, par l'intermédiaire d'un cavalier 129 chevauchant la trajectoire que suivent les supports 76 lors de la rotation du bâti 50 autour de l'axe 3 par rapport au support 1.

Dans deux zones diamétralement opposées, en pratique situées suivant un même plan moyen 130 incluant l'axe 3 et perpendiculaire suivant cet axe au plan 131 bissecteur de l'angle bêta (ce plan 131 étant également le plan de symétrie de l'organe 99 et le plan de coupe repéré I-I), la bague 128 présente un conduit, respectivement 132 et 133, de raccordement à une source d'air sous pression, lequel conduit débouche, à l'intérieur de la bague 128, dans un conduit, respectivement 134 et 135, débouchant lui-même, suivant le plan 130, dans une face périphérique extérieure 136 de la bague 128, cette face 136 étant cylindrique de révolution autour de l'axe 3 et en contact avec possibilité de rotation relative avec le fond 137 de la gorge 127, également cylindrique de révolution autour de l'axe 3.

Le fond 137 de la gorge 127 est creusé, à l'intérieur de la bague 126, d'autant de cavités 138 qu'il y a de canaux 119, c'est-à-dire de poinçons 109 ou de supports 76 pour un véhicule, chacune de ces cavités 128 étant par exemple délimitée par une face supérieure 139 et une face inférieure 140 parallèles, perpendiculaires à l'axe 3, et par une face de fond 141 arrondie, concave vers l'axe 3; dans sa zone de concavité maximale, chaque cavité 138 est reliée à la face inférieure 142 de la bague 126, en contact intime avec la face supérieure 68 du couvercle 67, par un conduit 143 présentant dans l'exemple illustré un axe 144 parallèle à l'axe 3, perpendiculaire à la direction moyenne 120 d'un canal 119 qui lui est associé, en amont de l'embouchure 122 de celui-ci si l'on se réfère au sens de rotation 88; à travers le couvercle 67, le conduit 143 est relié à une zone de la face inférieure 66 du disque 67 située à proximité immédiate de l'embouchure 122 du canal 119 correspondant par un conduit oblique 145, orienté de haut en bas vers l'intérieur du canal 119 pour y insuffler de l'air vers l'alésage 108 correspondant.

Le fonctionnement du dispositif qui vient d'être décrit est le suivant.

Le plateau 11 et le bâti 50 sont entraînés par leurs moyens moteurs propres à la rotation autour de l'axe 3 par rapport au support 1, le premier à une vitesse angulaire supérieure à la vitesse du second si l'on prend pour référence le support fixe 1.

Les amorces sont amenées par le conduit 22, alors libéré du doigt 36, sur la face supérieure 12 du plateau 11, avec laquelle elles sont en contact par leur face de base 31; du fait de la rotation du plateau 11, ces amorces tendant à migrer vers la périphérie extérieure 14 de la face supérieure 12 de celui-ci, où elles viennent au contact de la périphérie intérieure 60 du rebord 59, et tendant à tourner sur elles-mêmes contre celle-ci du fait de la différence entre les vitesses de rotation respectives du rebord 59 et de la face 12, viennent s'accumuler dans les poches 123 et dans chacun des canaux 119, vers lesquels elles sont déviées par les becs 124; dans chacun des canaux 119, les amorces migrent ainsi vers l'alésage 108 correspondant.

Si l'on envisage le trajet suivi par une zone du bâti 50 correspondant à l'un des axes 86 de celui-ci, le passage de l'axe 86 dans le plan 96, au poste d'alimentation 89, correspond à la prise en charge d'un véhicule 78 par le support 76 correspondant, dans une position dans laquelle l'axe de ce véhicule coïncide avec l'axe 86; le poinçon 109 correspondant est alors en position basse, dans laquelle sa face supérieure 110 est coplanaire avec la face supérieure 12 du plateau 11; du fait de la rotation du plateau 11 à vitesse angulaire élevée dans le sens 49 autour de l'axe 3 et supérieure à celle de la couronne 55, ainsi que du rebord 59 et de l'inclinaison des canaux 119, l'introduction d'amorces en file dans le canal 119 correspondant amène l'une de ces amorces à l'intérieur de l'alésage 108, dans une position dans laquelle elle est au contact de la face supérieure 110 du poinçon 109 par sa face de base 31.

La rotation du bâti 50 dans le sens 88 par rapport au support fixe 1 se poursuivant, la cavité 138 communiquant avec l'embouchure 122 du canal 119 envisagé entre en communication avec le conduit 134 relié via le conduit de raccordement 132 à la source de gaz sous pression, ce qui provoque un placage de l'amorce 26 ainsi placée dans l'alésage 108 contre la paroi de celui-ci, c'est-à-dire un positionnement précis de cette amorce, tel que son axe 28 coïncide avec l'axe 86; on notera que, dans le cas de cette variante préférée comportant des moyens de soufflage à l'intérieur des canaux vers les alésages respectifs correspondants, dans des positions prédéterminées, le chemin de roulement 118 des galets 116 est tel que les poinçons 109 restent en position basse du franchissement du plan 96, au poste d'alimentation 89, par leur axe 86, au premier franchissement par cet axe du plan 130 au niveau duquel s'effectue le premier soufflage.

Ensuite, le chemin de roulement 118 provoque le levage du poinçon 109 jusqu'à sa position supérieure, c'est-à-dire l'introduction de l'amorce 26 dans le véhicule 78, dans lequel elle s'immobilise par exemple par friction; on notera que, au cours de ce mouvement ascendant du poinçon 109, ce poinçon empêche toute migration des amorces contenues dans le canal vers l'alésage 108 correspondant à celui-ci.

Lorsque l'axe 86 considéré franchit pour la deuxième fois le plan 130, les amorces contenues dans le canal correspondnt sont soumises à un nouveau soufflage du fait de la présence du conduit 135 en liaison via le conduit de raccordement 133 avec la source de gaz sous pression, ce qui provoque un nouveau placage des amorces dans le canal.

Si le mouvement ascendant du poinçon 109 s'est accompagné d'un mouvement de pénétration de l'extrémité supérieure de celui-ci à l'intérieur du véhicule correspondant, le poinçon 109 amorce alors son mouvement de retour vers sa position inférieure, le chemin de roulement 118 contre lequel le galet 116 est maintenu pressé par le jeu du ressort 114 présentant à cet effet une forme descendante dans le sens de rotation 88, et le véhicule 78 muni intérieurement d'une amorce 26 est évacué au poste de reprise 90 dès que l'axe 86 franchit le plan 100 au niveau de ce poste de reprise.

Dès que le poinçon a regagné sa position inférieure, libérant la zone de l'alésage 108 située au-dessus de la face 12 du plateau 11, les amorces reprennent leur migration dans le sens d'un éloignement par rapport à l'axe 3 le long du canal 119, jusqu'à ce que l'une d'entre elles parvienne dans l'alésage 108 et repose par sa face de base 31 sur la face supérieure 110 du poinçon 109.

Le cycle décrit ci-dessus reprend alors.

Comme il a été dit plus haut, si les amorces s'accumulent en trop grand nombre sur la face supérieure 12 du plateau 11, elles provoquent un pivotement du bras 47 vers sa position 47a, et l'interruption de l'écoulement des amorces dans le conduit 22 par le jeu du doigt 36 jusqu'à ce que le surplus d'amorces se soit écoulé de la façon décrite ci-dessus par les canaux 119, pour garnir des véhicules 78; lorsque le surplus est ainsi écoulé, le bras 47 revient à sa position illustrée en traits pleins, libérant ainsi l'écoulement des amorces dans le conduit 22.

Avantageusement, chaque poinçon 109 est monté élastiquement sur le porte-poinçon 111 correspondant de façon à éviter un endommagement au cas où une amorce viendrait à se coincer dans son mouvement ascendant vers l'intérieur d'un véhicule 78, comme il est schématisé en 146, et des moyens dont la réalisation est du domaine des connaissances de l'Homme du Métier sont prévus pour contrôler que chaque poinçon parvient dans la position haute prédéterminée lors de sa course ascendante de façon à signaler à l'opérateur, par un arrêt d'urgence, un éventuel coincement accidentel d'une amorce, qui se traduirait par un remplissage incorrect du logement du véhicule correspondant et pourrait conduire à une explosion de l'amorce à l'extraction du véhicule.

Naturellement, le mode de mise en œuvre de l'invention qui vient d'être décrit ne constitue qu'un exemple non limitatif, et l'on pourrait y apporter de nombreuses variantes sans que l'on sorte pour autant du cadre de l'invention, par exemple en vue d'une application du dispositif dans un domaine autre que la mise en place d'amorces dans des véhicules, en cinématique continue.

Dans le cas particulier du positionnement d'amorces de munitions dans des véhicules, la présente invention a permis, en prévoyant huit supports 76 pour un véhicule 78, avec un angle mort bêta de l'ordre de 60°, une vitesse de rotation du bâti 50 par rapport au support 1 de l'ordre de 50 tours par minute et une vitesse de rotation du plateau 11 par rapport à ce même support de l'ordre de 80 à 100 tours par minute, de placer environ 400 amorces par minute dans les véhicules correspondants; ces chiffres donnés à titre d'exemple non limitatif correspondent à un très net progrès par rapport aux techniques antérieures évoquées plus haut.

Du fait de l'accumulation des amorces dans les canaux 119, elle a en outre permis d'obtenir une alimentation constante des alésages 108, c'est-à-dire l'introduction effective d'une amorce dans chaque logement respectif d'un véhicule, alors que les dispositifs de l'Art antérieur conduisent à une répartition aléatoire, donc à des logements vides qu'il faut détecter.

On notera que la forme et les dimensions des pièces que l'on peut traiter selon l'invention par exemple en vue de les introduire dans les logements d'objets circulant en cinématique continue peuvent varier considérablement, les adaptations correspondantes du dispositif étant du domaine des aptitudes normales de l'Homme du Métier.

Toutefois, les dispositifs selon l'invention trouvent plus particulièrement leur application dans le traitement de pièces présentant une périphérie latérale cylindrique comme il a été décrit, ou polygonale, avec un rapport du diamètre moyen à la hauteur voisin de 1 dans le cas d'une pièce creuse dont le centre de gravité est situé à moins de la moitié de la hauteur totale par rapport à la face de base, et voisin de ½ dans le cas d'une pièce pleine. Naturellement, ces formes et chiffres sont donnés à titre d'exemples non limitatifs.

## Revendications

1. Dispositif d'emboîtement mutuel de pièces (26) présentant une face de base (31) et d'objets (78) circulant en cinématique continue, comportant:

– un plateau (11) présentant une face supérieure (12) plane, lisse, horizontale, de périphérie extérieure (14) circulaire,

– des moyens (21) pour déposer des pièces (26) sur ladite face (12) du plateau (11), dans une position dans laquelle ces pièces (26) reposent sur cette face (12) par leur face de base (31),

– des moyens (9) pour provoquer la rotation du plateau (11), par rapport à un support (1) fixe, dans un sens prédéterminé (49), autour d'un axe vertical (3),

– une pluralité d'alvéoles individuels (108) répartis selon un pas prédéterminé le long de la périphérie extérieure (14) de la face supérieure (12) du plateau (11), et présentant un fond (110) coplanaire avec celle-ci et une forme complémentaire de celle d'une pièce (26) pour recevoir une telle pièce (26) dans une position prédéterminée dans laquelle elle repose sur le fond (110) par sa face de base (31),

– des moyens (53) pour provoquer la rotation des alvéoles (108) autour dudit axe (3),

– des moyens (76) pour retenir provisoirement un objet (78) à l'aplomb de chaque alvéole (108), ces moyens (76) étant fixes par rapport aux alvéoles (108),

– des moyens (89) d'alimentation en objets (78) démunis de pièces (26) et des moyens de reprise (90) d'objets (78) portant une pièce (26), respectivement dans une zone d'alimentation (89) et dans une zone de reprise (90) disposées sur le passage obligé des moyens (76) pour retenir provisoirement un objet (78) à l'aplomb de chaque alvéole (108) lors de ladite rotation des alvéoles (108),

– des poinçons (109) à raison d'un par alvéole (108), dans l'alignement vertical (86) de celui-ci, chaque poinçon (109) étant guidé à la translation suivant une direction verticale (86) dans des moyens (112) fixes par rapport aux alvéoles (108), entre une première position dans laquelle il est situé à l'opposé desdits moyens (76) pour retenir provisoirement un objet par rapport à l'alvéole associé (108), et une deuxième position dans laquelle il traverse l'alvéole (108) verticalement,

– des moyens (116, 118) pour provoquer un mouvement de translation du poinçon (109) au fur et à mesure de la rotation des alvéoles (108), de telle sorte qu'il occupe sa première position dans la zone d'alimentation (89), et gagne sa deuxième position entre la zone d'alimentation (89) et la zone de reprise (90),

caractérisé en ce que, en vue de l'introduction desdites pièces dans des logements respectifs des objets circulant en cinématique continue:

– les moyens (21) pour déposer des pièces (26) sur ladite face (12) du plateau (11), dans une position dans laquelle ces pièces (26) reposent sur cette face (12) et par leur face de base (31), sont disposés de façon à déposer des pièces dans une zone centrale de ladite face (12) du plateau (11),

– lesdits moyens (9) pour provoquer la rotation du plateau (11), par rapport au support (1) fixe, dans un sens prédéterminé (49), autour d'un axe vertical (3), provoquent ladite rotation à une vitesse telle qu'il en résulte l'exercice, sur les pièces (26), d'une force centrifuge les acheminant vers la périphérie extérieure (14) de ladite face (12),

– il est prévu un organe (55, 59) de guidage présentant au-dessus de la face supérieure (12) du plateau (11), à proximité immédiate de celle-ci, une périphérie intérieure (60) et une pluralité de canaux (119) dont chacun débouche d'une part (122) dans cette périphérie intérieure (60) et d'autre part dans un alvéole (108), avec des dimensions telles qu'il autorise le passage des pièces (26) une à une de ladite périphérie intérieure audit alvéole (108),

– lesdits moyens (53) pour provoquer la rotation des alvéoles (108) autour dudit axe (3) sont prévus pour provoquer la rotation conjointe des alvéoles (108) et de l'organe de guidage (55, 59) autour dudit axe (3), par rapport au plateau (11), en sens inverse dudit sens prédéterminé (49),

– les moyens (76) pour retenir provisoirement un objet (78) à l'aplomb de chaque alvéole sont prévus pour retenir provisoirement un objet (78) au-dessus de chaque alvéole (108) dans une position dans laquelle cet objet (78) présente dans le prolongement vertical (86) de l'alvéole (108) un logement (80) pour une pièce (26), ces moyens (76) étant fixes par rapport aux alvéoles (108) et à l'organe de guidage (55, 59),

– chaque poinçon (109) est guidé à la translation suivant une direction verticale (86) dans des moyens (112) fixes par rapport aux alvéoles (108) et à l'organe de guidage (55, 59) entre ladite première position dans laquelle il présente une extrémité supérieure (110) plane, horizontale, en coplanéarité avec la face supérieure (12) du plateau (11) pour définir le fond d'un alvéole (108), et ladite deuxième position dans laquelle il traverse l'alvéole (108) verticalement et où son extrémité supérieure (110) est située à proximité immédiate du logement (80) de l'objet (78), ou dans ce logement (80).

2. Dispositif selon la revendication 1, chaque pièce (26) présentant perpendiculairement à sa face de base (31) une hauteur prédéterminée (h), caractérisé en ce qu'il comporte au-dessus de la face supérieure (12) du plateau (11) une face inférieure (66) plane, horizontale, d'un couvercle (67), placée à une distance de ladite face supérieure (12) voisine de ladite hauteur (h) et supérieure à celle-ci.

3. Dispositif selon la revendication 2, caractérisé en ce que le couvercle (67) est fixe par rapport aux alvéoles (108) et à l'organe de guidage (55, 59).

4. Dispositif selon l'une quelconque des revendications précédentes, caractérisé en ce que chaque canal (119) débouche dans la périphérie intérieure (60) de l'organe de guidage (55, 59) dans une zone (122) décalée vers l'amont, si l'on se réfère au sens de rotation prédéterminé (49), par rapport à l'alvéole correspondant (108).

5. Dispositif selon l'une quelconque des revendications précédentes, caractérisé en ce que la périphérie intérieure (60) de l'organe de guidage (55, 59) présente, respectivement immédiatement en aval de chaque zone (122) de la périphérie intérieure (60) de l'organe de guidage (55, 59) dans laquelle débouche un canal (119) si l'on se réfère audit sens prédéterminé (49), un bec (124) de déviation des pièces (26) vers ce canal (119).

6. Dispositif selon l'une quelconque des revendications précédentes, caractérisé en ce que la périphérie intérieure (60) de l'organe de guidage (55, 59) présente, respectivement immédiatement en amont de chaque zone (122) de la périphérie intérieure (60) de l'organe de guidage (55, 59) dans laquelle débouche un canal (119) si l'on se réfère audit sens prédéterminé (49), une poche (123) d'accumulation de pièces (26).

7. Dispositif selon l'une quelconque des revendications précédentes, caractérisé en ce qu'il comporte des moyens (12) de soufflage, d'un gaz dans les canaux (119), de la zone (122) dans laquelle ces derniers débouchent dans la périphérie intérieure (60) de l'organe de guidage (55, 59) vers les alvéoles (108) respectifs.

8. Dispositif selon l'une quelconque des revendications précédentes, caractérisé en ce que les moyens (53) pour provoquer la rotation conjointe des alvéoles (108) et de l'organe de guidage (55, 59) autour dudit axe (3), par rapport au plateau (11), en sens inverse dudit sens prédéterminé (49) comportent des moyens (53) pour provoquer la rotation conjointe des alvéoles (108) et de l'organe de guidage (55, 59) autour dudit axe (3), par rapport au support fixe (1), dans ledit sens prédéterminé (88, 49), à une vitesse angulaire inférieure à celle du plateau (11).

**Patentansprüche**

1. Vorrichtung zum gegenseitigen Einfügen bzw. Ineinanderfügen von Teilen (26) mit einer Unterseite (31) und kontinuierlich umlaufenden Gegenständen (78), mit einer Scheibe bzw. Platte (11), die eine ebene, glatte, horizontale Oberfläche (14) mit einer äusseren kreisförmigen Peripherie aufweist; Einrichtungen (21) zur Anordnung der Teile (26) auf dieser Fläche (12) der Scheibe (11), und zwar derart, dass die Teile (26) mit ihrer Unterseite bzw. Unterfläche (31) auf der Fläche (12) lasten; Einrichtungen (9) zur Einleitung der Drehung der Scheibe (11) in bezug auf ein ortsfestes Halte- bzw. Stützteil (1) in einer vorgegebenen Richtung um eine vertikale Achse (3) einer Vielzahl von individuellen Zellen bzw. Waben (108), die in vorgegebenen Abständen entlang der äusseren Peripherie (14) der Oberfläche (12) der Scheibe (11) verteilt sind und eine mit dieser koplanare Bodenfläche (110) und eine mit der Form der Teile (26) komplementäre Form aufweisen, derart, dass ein solches Teil (26) in einer vorgegebenen Lage aufgenommen werden kann, in der es mit seiner Unterfläche (31) auf der Bodenfläche (110) lastet; Einrichtungen (53) zur Einleitung der Drehung der Zellen (108) um die Achse (3); Einrichtungen (76) zur vorläufigen bzw. provisorischen Festlegung eines Gegenstands (78) in senkrechter Richtung jeder Zelle (108), wobei diese Einrichtungen (76) in bezug auf die Waben (108) festgelegt sind; Einrichtungen (89) zur Versorgung bzw. Beschickung der unbestückten bzw. leeren Gegenstände (78) ohne Teilen (26) und Einrichtungen (90) zur Übernahme bzw. Aufnahme der mit einem Teil (26) bestückten Gegenstände (78), die jeweils in einer Versorgungs- bzw. Beschickungszone (89) und in einer Über- bzw. Aufnahmezone (90) über dem Durchgang der Einrichtungen (76) zur provisorischen Festlegung eines Gegenstands (78) in senkrechter Richtung jeder Zelle (108) während der Drehung der Zellen (108) angeordnet sind; Dorne (109) im Verhältnis von einem Dorn je Zelle (108) in vertikaler Ausrichtung (86) mit letzterer, wobei jeder Dorn (109) in vertikaler Richtung (86) in Einrichtungen (112), die in bezug auf die Zellen (108) festgelegt sind, translatorisch geführt wird, und zwar zwischen einer ersten Position, in der er der Einrichtung (76) zur provisorischen Festlegung eines Gegenstands gegenüber der zugehörigen Zelle (108) entgegengesetzt angeordnet ist, und einer zweiten Position, in der er die Zelle (108) vertikal traversiert; Einrichtungen (116, 118) zur Einleitung einer translatorischen Bewegung des Dorns (109) in dem Masse, wie die Zellen (108) drehen, derart, dass dieser seine erste Position in der Beschickungszone (89) einnimmt und seine zweite Position zwischen der Beschickungszone (89) und der Über- bzw. Aufnahmezone erreicht; dadurch gekennzeichnet, dass im Hinblick auf die Einführung der genannten Teile in jeweilige Aufnahmesitze der kontinuierlich umlaufenden Gegenstände die Einrichtungen (21) zur Anordnung der Teile (26) auf der genannten Fläche (12) der Scheibe (11) in einer Position, in der die Teile (26) mit ihrer Unterseite (31) auf der Fläche (12) lasten, derart angeordnet sind, dass die Teile in einer zentralen Zone der Fläche (12) der Scheibe (11) angeordnet werden; die Einrichtungen (9) zur Einleitung der Drehung der Scheibe (11) in bezug auf das ortsfeste Halte- bzw. Stützelement (1) in einer vorgegebenen Richtung (49) um die senkrechte Achse (3) diese Drehung bei einer Geschwindigkeit einleitet, derart, dass auf die Teile (26) eine Zentrifugalkraft ausgeübt wird, die diese in Richtung auf die äussere Peripherie (14) der Fläche (12) lenkt; ein Führungsorgan (55, 59) vorgesehen ist, das auf der Oberfläche (12) der Scheibe (11) in unmittelbarer Nähe derselben eine innere Peripherie (60) und eine Vielzahl von Kanälen (119) aufweist, deren jeder einerseits (122) in der inneren Peripherie (60) und andererseits in einer Zelle (108) mündet, wobei die Dimensionen jedes Kanals derart bemessen sind, dass er den Durchgang der Teile (26) eines nach dem anderen von der inneren Peripherie bis zur Zelle (108) erlaubt; die Einrichtungen (53) zur Einleitung der Drehung der Zellen (108) um die Achse (3) vorgesehen sind zur Einleitung der gemeinsamen Drehung der Zellen (108) und des Führungsorgans (55, 59) um die Achse (3) in bezug auf die Scheibe (11), und zwar in der zur vorgegebenen Richtung (49) umgekehrten Richtung; die Einrichtungen (76) zur provisorischen Halterung bzw. Festlegung eines Gegenstands (78) in senkrechter Richtung jeder Zelle vorgesehen sind zur provisorischen Festlegung eines Gegenstands (78) auf jeder Wabe (108) in einer Position, in der dieser Gegenstand (78) in der vertikalen Verlängerung (86) der Zelle (108) einen Sitz bzw. Aufnahmesitz (80) für ein Teil (26) aufweist, wobei die Einrichtungen (76) in bezug auf die Zellen (108) und das Führungsorgan (55, 59) festgelegt sind; jeder Dorn (109) in vertikaler Richtung (86) in einer gegenüber den Zellen (108) und dem Führungsorgan (55, 59) festgelegten Einrichtung (112) translatorisch geführt ist, und zwar zwischen der ersten Position, in der er eine ebene, horizontale, mit der Oberfläche (12) der Scheibe (11) koplanare obere Extremität (110) zur Definition des Bodens einer Zelle (108) aufweist, und der zweiten Position, in der er die Zelle (108) vertikal traversiert und in der sich seine obere Extremität (110) in unmittelbarer Nähe des Sitzes (80) des Gegenstands (78) oder in dem Sitz (80) befindet.

2. Vorrichtung nach Anspruch 1, wobei jedes Teil (26) senkrecht zu seiner Unter- bzw. Basisfläche (31) eine vorgegebene Höhe (h) aufweist, dadurch gekennzeichnet, dass diese auf der Oberseite (12) der Scheibe bzw. Platte (11) eine ebene, horizontale Unterseite (66) einer Abdeckung (67) aufweist, welche Unterseite zur Oberseite (12) mit einen Abstand beabstandet angeordnet ist, der ähnlich wie die Höhe (h) und grösser als dieselbe ist.

3. Vorrichtung nach Anspruch 2, dadurch gekennzeichnet, dass die Abdeckung bzw. der Deckel (67) gegenüber den Zellen (108) und dem Führungsorgan (55, 59) festgelegt ist.

4. Vorrichtung nach einem der vorhergehenden Ansprüche, dadurch gekennzeichnet, dass jeder Kanal (119) in der inneren Peripherie (60) des Führungsorgans (55, 59) mündet, nämlich in einer Zone, die unter Bezugnahme auf die vorgegebene Drehrichtung (49) in bezug auf die betreffende Zelle (108) stromaufwärts versetzt bzw. verschoben ist.

5. Vorrichtung nach einem der vorhergehenden Ansprüche, dadurch gekennzeichnet, dass die innere Peripherie (60) des Führungsorgans (55, 59) unter Bezugnahme auf die vorgegebene Richtung (49) jeweils unmittelbar stromabwärts jeder Zone (122) der inneren Peripherie (60) des Führungsorgans (55, 59), in der ein Kanal (119) mündet, eine Schnauze (124) zur Ableitung der Teile (26) in Richtung auf den Kanal (119) aufweist.

6. Vorrichtung nach einem der vorhergehenden Ansprüche, dadurch gekennzeichnet, dass die innere Peripherie (60) des Führungsorgans (55, 59) unter Bezugnahme auf die vorgegebene Richtung (49) jeweils unmittelbar stromaufwärts jeder Zone (112) der inneren Peripherie (60) des Führungsorgans (55, 59) in der ein Kanal (119) mündet, eine Tasche bzw. Pfanne (123) zum Sammeln der Teile (26) aufweist.

7. Vorrichtung nach einem der vorhergehenden Ansprüche, dadurch gekennzeichnet, dass diese eine Einrichtung (125) zum Einblasen von Gas in die Kanäle (119) von der Zone (122) an, in der letztere in der inneren Peripherie (60) des Führungsorgans (55, 59) münden, in Richtung auf die jeweiligen Zellen (108) aufweist.

8. Vorrichtung nach einem der vorhergehenden Ansprüche, dadurch gekennzeichnet, dass die Einrichtung (53) zur Einleitung der gemeinsamen Drehung der Zellen (108) und des Führungsorgans (55, 59) um die Achse (3) in bezug auf die Scheibe (11) in der zur vorgegebenen Richtung (49) umgekehrten Richtung Einrichtungen (53) zur Einleitung der gemeinsamen Drehung der Zellen (108) und des Führungsorgans (55, 59) um die Achse (3) in bezug auf das ortsfeste Halte- bzw. Stützelement (1) in der vorgegebenen Richtung (88, 49) bei einer niedrigeren Winkelgeschwindigkeit als jener der Scheibe bzw. Platte (11) aufweist.

**Claims**

1. Apparatus for the mutual fitting together of components (26) having a base face (31) and articles (78) travelling with continuous motion, comprising:

a turntable (11) having a plane, smooth, horizontal upper face (12) with a circular outer periphery (14), means (21) for placing components (26) on the said face (12) of the turntable (11), in a position in which these components (26) rest on this face (12) by means of their base face (31), means (9) for making the turntable (11) rotate relative to a fixed support (1) in a predetermined direction (49) about a vertical axis (3), a plurality of individual cells (108) distributed at a predetermined pitch along the outer periphery (14) of the upper face (12) of the turntable (11) and having a bottom (110) coplanar with this and a shape matching that of a component (26), to receive such a component (26) in a predetermined position, in which it rests on the bottom (110) by means of its base face (31), means (53) for making the cells (108) rotate about the said axis (3), means (76) for temporarily retaining an article (78) vertically aligned with each cell (108), these means (76) being fixed relative to the cells (108), means (89) for supplying articles (78) which are not provided with components (26) and means (90) for picking up articles (78) carrying a component (26), in a supply zone (89) and in a pick-up zone (90) respectively, which zones are arranged in the compulsory path of the means (76) for temporarily retaining an article (78) vertically aligned with each cell (108) during the said rotation of the cells (108), punches (109) with a distribution of one per cell (108), in vertical alignment (86) with the latter, each punch (109) being guided in translation in a vertical direction (86) in means (112) fixed relative to the cells (108), between a first position, in which it is located opposite the said means (76) for temporarily retaining an article relative to the associated cell (108), and a second position, in which it passes vertically through the cell (108), means (116, 118) for providing a translational movement of the punch (109) as the rotation of the cells (108) proceeds, in such a way that it occupies its first position in the supply zone (89) and assumes its second position between the supply zone (89) and the pick-up zone (90), characterized in that, in order to introduce the said components into corresponding receptacles in the articles travelling with continuous motion: the means (21) for placing the components (26) on the said face (12) of the turntable (11), in the position in which these components (26) rest on the said face (12) by means of their base face (31), are arranged so as to place components in a central zone of the said face (12) of the turntable (11), the said means (9) for making the turntable (11) rotate relative to the fixed support (1) in a predetermined direction (49) about a vertical axis (3) cause the said rotation at such a speed that, as a result, a centrifugal force is exerted on the components (26), conveying them towards the outer periphery (14) of the said face (12), there is provided a guide member (55, 59) having above the upper face (12) of the turntable (11), in the immediate vicinity of the latter, an inner periphery (60) and a plurality of channels (119), each of which opens at one end (122) into this inner periphery (60) and at the other end into a cell (108), with such dimensions that it allows the components (26) to pass one by one from the said inner periphery to the said cell (108), the said means (53) for making the cells (108) rotate about the said axis (3) are intended to cause the joint rotation of the cells (108) and of the guide member (55, 59) about the said axis (3) relative to the turntable (11), in the opposite direction to the said predetermined direction (49), the means (76) for temporarily retaining an article (78) vertically aligned with each cell are intended to retain an article (78) temporarily above each cell (108) in a position, in which this article (78) has, in the vertical extension (86) of the cell (108), a receptacle (80) for a component (26), these means (76) being fixed relative to the cells (108) and relative to the guide member (55, 59), each punch (109) is guided in translation in a vertical direction (86) in means (112) fixed relative to the cells (108) and relative to the guide member (55, 59), between the said first position, in which it has a plane horizontal upper end (110) coplanar with the upper face (12) of the turntable (11), to define the bottom of a cell (108), and the said second position, in which it passes vertically through the cell (108) and in which its upper end (110) is located in the immediate vicinity of the receptacle (80) of the article (78) or in this receptacle (80).

2. Apparatus according to Claim 1, each component (26) having a predetermined height (h) perpendicular to its base face (31), characterized in that it possesses, above the upper face (12) of the turntable (11), a plane horizontal lower face (66) belonging to a cover (67) and located at a distance from the said upper face (12) which nearly matches the said height (h) and which exceeds the latter.

3. Apparatus according to Claim 2, characterized in that the cover (67) is fixed relative to the cells (108) and relative to the guide member (55, 59).

4. Apparatus according to any one of the preceding claims, characterized in that each channel (119) opens into the inner periphery (60) of the guide member (55, 59), in a zone (133) shifted upstream, if the predetermined direction of rotation (49) is considered, in relation to the corresponding cell (108).

5. Apparatus according to any one of the preceding claims, characterized in that the inner periphery (60) of the guide member (55, 59) possesses respectively, immediately downstream of each zone (122) of the inner periphery (60) of the guide member (55, 59), into which a channel (119) opens, if the said predetermined direction (49) is considered, a nose (124) deflecting the components (26) towards this channel (119).

6. Apparatus according to any one of the preceding claims, characterized in that the inner periphery (60) of the guide member (55, 59) possesses respectively, immediately upstream of each zone (122) of the inner periphery (60) of the guide member (55, 59), into which a channel (119) opens, if the said predetermined direction (49) is considered, a pocket (123) for the accumulation of components (26).

7. Apparatus according to any one of the preceding claims, characterized in that it has means (125) for blowing a gas into the channels (119) from the zone (122), in which the latter open into the inner periphery (60) of the guide member (55, 59), towards the respective cells (108).

8. Apparatus according to any one of the preceding claims, characterized in that the means (53) for making the cells (108) and the guide member (55, 59) both rotate about the said axis (3) relative to the turntable (11), in the opposite direction to the said predetermined direction (49), comprise means (53) for making the cells (108) and the guide member (55, 59) both rotate about the said axis (3) relative to the fixed support (1), in the said predetermined direction (88, 49), at an angular speed less than that of the turntable (11).

FIG_1

FIG_2

0 084 503

FIG_3

FIG_4

FIG_5

FIG_6

FIG_7